# EUROPEAN PATENT SPECIFICATION

(11) **EP 1 740 441 B1**
(45) Date of publication and mention of the grant of the patent: **07.07.2010**
(21) Application number: 05729942.2
(22) Date of filing: 13.04.2005
(51) Int. Cl.: B62D 33/02, B62D 27/06, B60P 7/12

(54) **POST CONNECTION MEANS FOR LOAD VEHICLES, AND MANUFACTURING METHOD**
PFOSTENVERBINDUNGSMITTEL FÜR LASTFAHRZEUGE UND HERSTELLUNGSVERFAHREN
SYSTEME D'ARRIMAGE DE COLONNE POUR VEHICULES DE TRANSPORT DE CARGAISON, ET PROCEDES DE FABRICATION

(30) Priority: 19.04.2004 SE 0401003
(43) Date of publication of application: 10.01.2007
(73) Proprietor: Laxo Mekan AB, 70221 Örebro (SE)
(72) Inventor: HIMBERG, Tomas c/o Laxo Mekan AB, S-702 21 Örebro (SE)
(74) Representative: Janson, Ronny
(86) International application number: PCT/SE2005/000530
(87) International publication number: WO 2005/100137

(56) References cited:
- EP-A1- 0 098 250

## Description

The present invention generally relates to a post connection means for a load vehicle, and to a method of manufacturing such post connection means, and the invention is more particularly directed to a post connection means which is stationary mounted adjacent the sides of a load platform of a vehicle, and which is arranged for quickly and simply, but at the same time safely, securing a side post onto the vehicle, and which post can also quickly and simply be released, so that the load platform can be used for other purposes than for transportation of elongated objects like timber etc., and which need very stable side supports.

A post connection means is priorly known which is arranged to be introduced through a bore which is provided in the supporting frame of the load platform of a motor vehicle, and to be fixed connected in said bore by welding or in another way, and which comprises a sleeve having a length of 2-4 times the diameter of a circular load post, for instance a couple of decimetres, and which is formed with a through slot extending from the upper edge of the sleeve as far as to a place close to the bottom of the sleeve, and which at said lower end is ended by a bayonet sleeve portion of a type known per se having an inclined bottom edge and a parallelly of nearly parallelly thereto formed upper edge, A load post is adapted to be introduced and to be secured in said sleeve in that a projection pin at the lower part of the post is moved down in the through slot of the sleeve and is secured in the bayonet sleeve by being rotated when in its fully moved down position.

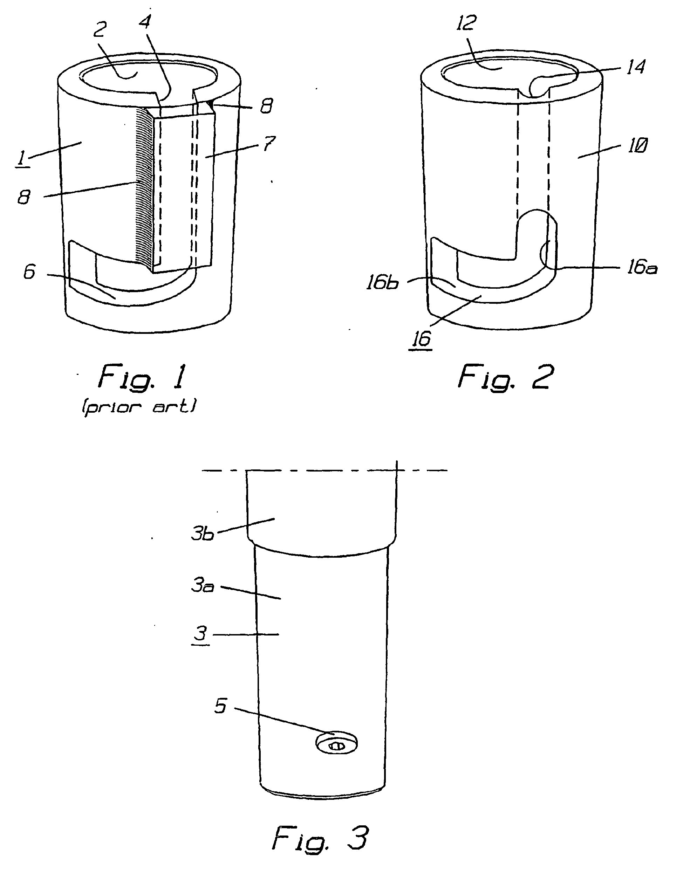

For keeping the sleeve together and preventing a deflection of the sleeve at the vertical through slot, which may be caused by the large side forces that the post can be subjected to, the sleeve is formed with a rib at the outside thereof, which rib is welded to the sleeve on each side of the slot. A post connection means of the said type is shown in figure 1 of the drawings.

The interconnecting rib has substantially the same thickness as that of the sleeve, and hence it projects a distance out of the periphery of the sleeve. The manufacture of the rib and the welding thereof to the sleeve is time consuming and involves costs. The existence of the projecting rib also involves problems when providing the bore therefore in the load platform in that also said introduction bore must be formed with a recess corresponding to the projecting rib of the post. The placing of the said bore recess also restricts the possibility of placing the post socket in any optionally rotated position on the load platform.

EP 0 098 250 A1 shows a quick socket and a strut, the strut having a projecting shoulder for securing of the strut in a corresponding groove in the socket, the quick socket comprising a carrier portion and a locking portion, the carrier portion being in part circular cylindrical and being open to the locking portion, the carrier portion having a strut receiving space where a vertical slot is arranged on each side of and adjacent to the locking portion, the slot being connected to a recess and in combination therewith forming a bajonet like locking groove for the projecting shoulder.

The object of the invention therefore is to solve the problem of providing a post connection means without any projection parts, and in which the guide groove for the projecting pin of the post is formed like a slot which is provided inside the sleeve bore and which does not extend all the way through the thickness of the sleeve material.

The invention relates to a method of manufacturing a post connection means of the said type, and to the corresponding post connection means respectively according to claims 8 and 1.

According to the invention the post is formed with a verticai or nearly vertical guide groove for the projecting pin of the post, which guide groove is provided from the interior of the sleeve material, and which does thus not -extend through the sleeve wall material, and said vertical or nearly vertical guide groove is, at the lower end thereof, extended into a bayonet groove which, for manufacturing reasons, extends through the sleeve wall material, but which may eventually be formed non-through, like the vertical guide groove, and which, as known in the art, is formed with an inclined bayonet locking groove extending peripherally out of the vertical guide groove.

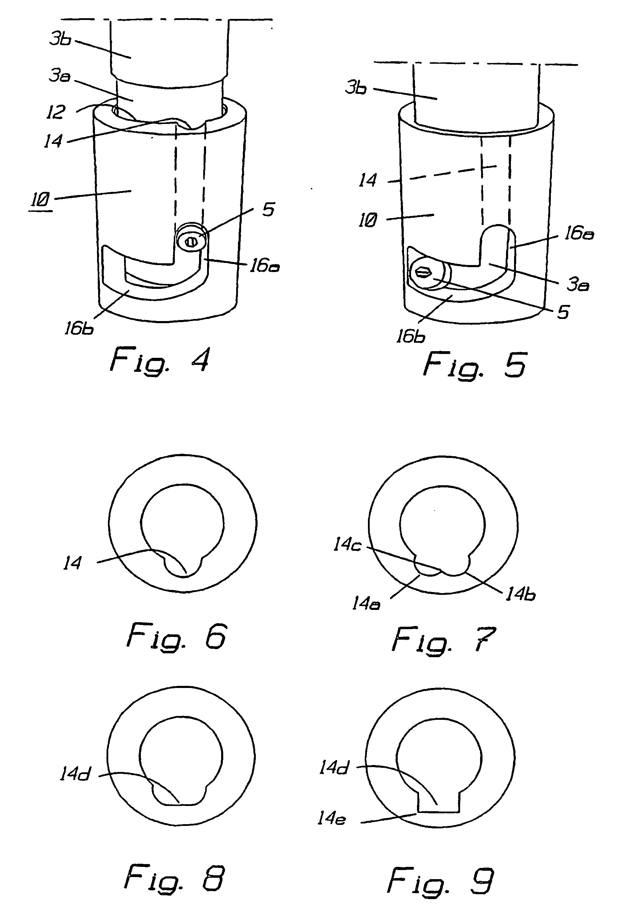

The vertical guide groove may have any cross section shape, like rectangular or bow formed. In a preferred embodiment of the invention said vertical guide groove is provided by being drilled or cutter milled so as to form an arc from the interior side of the sleeve, which groove is connected to the bayonet groove, which can be provided before or after the vertical guide groove is provided. In a first embodiment of the invention said vertical guide groove is drilled or cut out so as to provide a substantially semi-circular or circular segment groove, see figure 6. Alternatively two, of eventually several circular segments may be drilled or cut out adjacent each other, so that said two or more circle segments in common form the vertical guide groove, see figure 7. If desired the top between the two co-operating circle segments can be ground or cut away, so that the bottom of the guide groove is formed substantially flat, see figure 8.

Now the invention will be described more in detail with reference to the embodiments thereof shown in the drawings. In figure 1 there is shown a perspective view of a post sleeve according to prior art. In figure 2 is correspondingly shown a post sleeve according to the invention. Figure 4 shows a first phase of the introduction of a post into the connection sleeve, and figure 5 shows the post in its fully mounted position in the connection sleeve. Figures 6, 7, 8 and 9 disclose, as seen from above, four different shapes of the vertical guide groove of the sleeve.

The known post connection sleeve shown in figure 1 comprises a sleeve 1 having a axial through central bore 2 for introducing of a post 3, which is shown in figure 3. The sleeve 1 is formed with a vertical guide groove 4 for a pin 5 of the post 3. The guide groove 4 is provided entirely through the material of the sleeve 1, and at the bottom end thereof it is ended by a bayonet groove 6 which, as usual, extends sideways of the vertical groove 4, that is in the peripheral direction of the sleeve. In the known embodiment the bayonet groove 6 extends entirely through the material of the sleeve. At the exterior side the sleeve is formed with a rib 7 which is wider than the guide groove 4 and which overlaps same at the exterior side of the sleeve 1 and is welded to same by vertically extending weld joints 8.

As mentioned above the said known apparatus involves some disadvantages which have been eliminated by the apparatus shown in figures 2-9. In said figures there is shown a sleeve 10 having an inner axial circular cylindrical bore 12 adapted to the introductory part 3a of a post 3 which is formed with a radially extending guide and lock pin 5. Above the introductory part 3a the post is formed with coarser post part 3b which both is formed as a support surface against the upper edge of the sleeve 10, and also provides a strengthening post part for supporting the load on the vehicle. For guiding the post 3 while it is being introduced into the sleeve 10 said sleeve is formed with an inner guide groove 14 which can be provided by being drilled out or cut out, and which, in the illustrated case, has the shape of a circle sector. At the lower part of the sleeve 10 said guide groove 14 is extended into a bayonet groove 16 having a first vertical part 16a and a mainly horizontal part 16b extending therefrom over a soft curvature and preferably having a slightly inclined bottom surface and an upper surface which is correspondingly mainly inclined correspondingly. For manufacturing technical reasons the bayonet groove 16 extends entirely through the sleeve wall but meets the guide groove 14 at the inner side of the sleeve 1.

In figures 2-6 the guide groove 14 is shown with the shape of a circular sector, which shape if provided by means of a drill or a rotatable milling cutter. The drilling can be made either before or after the cylindrical bore 12 of the sleeve 10 is provided.

In case a wider guide groove 14 is wanted this can be provided in that two grooves 14a and 14 b are drilled or milled out aside of each other as shown in figure 7. There is also a possibility of milling or grinding off the top 14c which is formed intermediate the two grooves 14a and 14b, whereby the bottom 14d of the guide groove is formed substantially flat, as shown in figure 8. Alternatively the guide groove 14 can be formed with sharp edges as shown in figure 9.

When the apparatus according to the invention is to be used bores are provided adjacent the sides and/or the rear end of the load platform or a support frame of a transport vehicle, which bores are circular and have a diameter which is the same as the outer diameter of the sleeve 10, and the sleeve is weld connected to the load platform. The post 10 is let down into the bore 12, see figure 4, and thanks to the shape of the bayonet groove 16 the post slides down into the bore 12 of the sleeve while being rotated, so that the locking pin 5 becomes positioned adjacent the end of the bayonet groove 16, as shown in figure 5.

A releasing of the post is simply made in that it is rotated, in the illustrated case counter clockwise, and it is lifted up from the post bore.

### REFERENCE NUMERALS

- 1: sleeve
- 2: central bore
- 3: post
- 3a: lower post part
- 3b: upper post part
- 4: vertical guide groove
- 5: pin
- 6: bayonet groove
- 7: rib
- 8: weld joint
- 10: sleeve
- 12: cylindrical bore
- 14: guide groove (a, b, c, d, e)
- 16: bayonet lock groove
- 16a: vertical part
- 16b: peripheral part

## Claims

1. Post connection means for transport vehicles having a supporting frame or a load platform, and comprising a sleeve (10) having an axial central bore (12) formed for receiving a load post (3) while guiding and locking same in said sleeve (10) by means of a radially extending pin (5) provided adjacent the lower end of the sleeve (3), wherein the means for guiding and locking the post (3) in the sleeve (10) is a vertical guide groove (14) at the inner surface of the sleeve (10), which co-operates with a bayonet groove (16) extending at an angle to said vertical guide groove (14) and in the peripheral direction of the sleeve, **characterized in**
- **that** the load sleeve (10) is exteriorly circular cylindrical and is fixed by being welded or in another way in a circular bore of a load platform or a supporting frame, and
- the vertical guide groove (14) is provided from the inside of the sleeve bore (12) and only partly extending through same.

2. Post connection means according to claim 1, **characterized in that** the vertical guide groove (14) at the inner surface of the sleeve (10) has the shape of a circle sector.

3. Post connection means according to claim 1 or 2, **characterized in that** the vertical guide groove (14) at the inner surface of the sleeve (10) is composed by two circle sectors (14a, 14b) provided adjacent each other.

4. Post connection means according to claim 3, **characterized in that** the top (14c) which is formed intermediate two circle sectors (14a, 14b) of the vertical guide groove provided adjacent each other is ground smooth, so that the vertical guide groove (14) gets a flat bottom (14d).

5. Post connection means according to claim 4, **characterized in that** the guide groove (14) is formed with flat bottom (14d) and sharp edges (14e).

6. Post connection means according to any of the preceding claims, **characterized in that** the vertical guide groove (14) is provided by means of a drill or a spiral milling cutter and extends about 50% through the material of the sleeve (10),

7. Post connection mean according to any of the preceding claims, **characterized in that** the bayonet groove (16) extends entirely through the material of the sleeve and is provided at an angle of a vertical upper part (16a) and with a horizontal lower part (16b) which parts (16a, 16b) are combined with each other over a bow formation.

8. Method of manufacturing a post connection means for load vehicles and comprising a mounting sleeve (10) adapted to be welded or secured in another way adjacent the edges of a load platform or a vehicle frame and a post (3) arranged for being moved down into the mounting sleeve (10) and to be secured therein, and In which the mounting strove (10) is formed a) with a central cylindrical bore (2) for receiving the post (3) and b) with a vertical guide groove (14) for guiding same using a projecting pin (5) while being introduced into the sleeve, and having a bayonet groove (16) extending at an angle to the vertical guide groove (14) and being directly connected to said vertical guide groove (14), **characterized in that** the sleeve (10) is exteriorly circular cylindrical and that the vertical guide groove (14) is provided by drilling or cutting of the groove from inside of the sleeve bore (12) only partly through the material of the sleeve (10).

9. Method according to claim. 8, **characterized in that** the vertical guide groove (14) is provided by drilling or cutting of two or more bores. (14a, 14b) adjacent each other from inside of the sleeve bore (12), and eventually by removing the top (14c) which is formed intermediate said two or more bores (14a, 14b), so that the groove gets a smooth and flat bottom (14d).

10. Method according to claim 8 or 9, **characterised in that** the bayonet groove (16) is formed entirely through the material of the sleeve (10) and is formed with a vertical part (16a) which is directly connected to the vertical guide groove (14), and a horizontal or slightly downwards inclined locking part (16b) extending therefrom.

## Patentansprüche

1. Pfostenverbindungseinrichtung für Transportfahrzeuge mit einem Stützrahmen oder einer Ladeplattform, und mit einer Hülse (10) mit einer axialen zentralen Bohrung (12), die zum Aufnehmen eines Ladepfostens (3) ausgebildet ist, während derselbe in der Hülse (10) mittels eines sich radial erstreckenden Bolzens (5) geführt und verriegelt wird, der benachbart zum unteren Ende der Pfosten (3) vorgesehen ist, wobei die Einrichtung zum Führen und Verriegeln des Pfostens (3) in der Hülse (10) eine vertikale Führungsnut (14) an der inneren Oberfläche der Hülse (10) ist, die mit einer Bajonettnut (16) zusammenwirkt, die sich in einem Winkel zur vertikalen Führungsnut (14) und in der Umfangsrichtung der Hülse erstreckt, **dadurch gekennzeichnet, dass**
- die Ladehülse (10) außen kreisförmig zylindrisch ist und durch Schweißen oder in einer anderen Weise in einer kreisförmigen Bohrung einer Ladeplattform oder eines Stützrahmens befestigt wird, und
- die vertikale Führungsnut (14) von der Innenseite der Hülsenbohrung (12) aus vorgesehen ist und sich nur teilweise durch dieselbe erstreckt,

2. Pfostenverbindungseinrichtung nach Anspruch 1, **dadurch gekennzeichnet, dass** die vertikale Führungsnut (14) an der inneren Oberfläche der Hülse (10) die Form eines Kreissektors aufweist.

3. Pfostenverbindungseinrichtung nach Anspruch 1 oder 2, **dadurch gekennzeichnet, dass** die vertikale Führungsnut (14) an der inneren Oberfläche der Hülse (10) aus zwei Kreissektoren (14a, 14b) besteht, die zueinander benachbart vorgesehen sind.

4. Pfostenverbindungseinrichtung nach Anspruch 3, **dadurch gekennzeichnet, dass** die Spitze (14c), die zwischen zwei Kreissektoren (14a, 14b) der vertikalen Führungsnut ausgebildet ist, die benachbart zueinander vorgesehen sind, glatt geschliffen ist, so dass die vertikale Führungsnut (14) einen flachen Boden (14d) erhält.

5. Pfostenverbindungseinrichtung nach Anspruch 4, **dadurch gekennzeichnet, dass** die Führungsnut (14) mit einem flachen Boden (14d) und scharfen Kanten (14e) ausgebildet ist.

6. Pfostenverbindungseinrichtung nach einem der vorangehenden Ansprüche, **dadurch gekennzeichnet, dass** die vertikale Führungsnut (14) mittels eines Bohrers oder eines Spiralfräsers geschaffen wird und sich etwa 50 % durch das Material der Hülse (10) erstreckt.

7. Pfostenverbindungseinrichtung nach einem der vorangehenden Ansprüche, **dadurch gekennzeichnet, dass** sich die Bajonettnut (16) vollständig durch das Material der Hülse erstreckt und in einem Winkel eines vertikalen oberen Teils (16a) und mit einem horizontalen unteren Teil (16b) vorgesehen ist, wobei die Teile (16a, 16b) über ein Bogengebilde miteinander kombiniert sind.

8. Verfahren zur Herstellung einer Pfostenverbindungseinrichtung für Lastfahrzeuge und mit einer Montagehülse (10), die dazu ausgelegt ist, benachbart zu den Kanten einer Ladeplattform oder eines Fahrzeugrahmens angeschweißt oder in einer anderen Weise befestigt zu werden, und mit einem Pfosten (3), der so beschaffen ist, dass er in die Montagehülse (10) hinab bewegt und darin befestigt wird, und wobei die Montagehülse (10) a) mit einer zentralen zylindrischen Bohrung (2) zum Aufnehmen des Pfostens (3) und b) mit einer vertikalen Führungsnut (14) zum Führen desselben unter Verwendung eines vorstehenden Bolzens (5), während er in die Hülse eingeführt wird, ausgebildet wird und eine Bajonettnut (16) aufweist, die sich in einem Winkel zur vertikalen Führungsnut (14) erstreckt und direkt mit der vertikalen Führungsnut (14) verbunden ist, **dadurch gekennzeichnet, dass** die Hülse (10) außen kreisförmig zylindrisch ist und dass die vertikale Führungsnut (14) durch Bohren oder Schneiden der Nut von der Innenseite der Hülsenbohrung (12) nur teilweise durch das Material der Hülse (10) bereitgestellt wird.

9. Verfahren nach Anspruch 8, **dadurch gekennzeichnet, dass** die vertikale Führungsnut (14) durch Bohren oder Schneiden von zwei oder mehr Bohrungen (14a, 14b) benachbart zueinander von der Innenseite der Hülsenbohrung (12) und schließlich durch Entfernen der Spitze (14c), die zwischen den zwei oder mehr Bohrungen (14a, 14b) gebildet wird, so dass die Nut einen glatten und flachen Boden (14d) erhält, bereitgestellt wird.

10. Verfahren nach Anspruch 8 oder 9, **dadurch gekennzeichnet, dass** die Bajonettnut (16) vollständig durch das Material der Hülse (10) ausgebildet wird und mit einem vertikalen Teil (16a), der direkt mit der vertikalen Führungsnut (14) verbunden ist, und einem horizontalen oder geringfügig nach unten geneigten Verriegelungsteil (16b), der sich davon erstreckt, ausgebildet wird.

## Revendications

1. Moyens de raccordement de montant pour des véhicules de transport ayant un châssis de support ou une plateforme de chargement, comprenant un manchon (10) ayant un alésage central axial (12) formé pour recevoir un montant de chargement (3) tout en guidant et en bloquant ce dernier dans ledit manchon (10) au moyen d'une broche (5) s'étendant de manière radiale, prévue de manière adjacente à l'extrémité inférieure du montant (3), dans lesquels les moyens pour guider et bloquer le montant (3) dans le manchon (10) sont une rainure de guidage verticale (14) au niveau de la surface interne du manchon (10), qui coopère avec une rainure à baïonnette (16) s'étendant selon un angle vers ladite rainure de guidage verticale (14) et dans la direction périphérique du manchon, **caractérisés en ce que :**
• le manchon de chargement (10) est cylindrique et extérieurement circulaire et est fixé en étant soudé ou d'une autre manière, dans un alésage circulaire d'une plateforme de chargement ou d'un châssis de support, et
• la rainure de guidage verticale (14) est prévue depuis l'intérieur de l'alésage (12) du manchon et ne s'étend que partiellement à travers ce dernier.

2. Moyens de raccordement de montant selon la revendication 1, **caractérisés en ce que** la rainure de guidage verticale (14) au niveau de la surface interne du manchon (10) a la forme d'un secteur circulaire.

3. Moyens de raccordement de montant selon la revendication 1 ou 2, **caractérisé en ce que** la rainure de guidage verticale (14) au niveau de la surface interne du manchon (10) est composée par deux secteurs circulaires (14a, 14b) prévus de manière adjacente entre eux.

4. Moyens de raccordement de montant selon la revendication 3, **caractérisés en ce que** la partie supérieure (14c) qui est formée entre deux secteurs circulaires (14a, l4b) de la rainure de guidage verticale prévus de manière adjacente entre eux, est meulée de manière lisse, de sorte que la rainure de guidage verticale (14) obtient un fond plat (14d).

5. Moyens de raccordement de montant selon la revendication 4, **caractérisés en ce que** la rainure de guidage (14) est formée avec un fond plat (14d) et des bords tranchants (14e).

6. Moyens de raccordement de montant selon l'une quelconque des revendications précédentes, **caractérisés en ce que** la rainure de guidage verticale (14) est prévue au moyen d'un foret ou d'une lame de scie circulaire à denture en double spirale et s'étend sur environ 50% à travers le matériau du manchon (10).

7. Moyens de raccordement de montant selon l'une quelconque des revendications précédentes, **caractérisés en ce que** la rainure à baïonnette (16) s'étend entièrement à travers le matériau du manchon et est prévue selon un angle d'une partie supérieure verticale (16a) et avec une partie inférieure horizontale (16b), lesquelles parties (16a, 16b) sont combinées entre elles sur une formation en forme d'arc.

8. Procédé pour fabriquer des moyens de raccordement de montant pour des véhicules de chargement et comprenant un manchon de montage (10) adapté pour être soudé ou fixé d'une autre manière, adjacent aux bords d'une plateforme de chargement ou d'un châssis de véhicule et un montant (3) agencé pour être descendu dans le manchon de montage (10) et être fixé à l'intérieur de celui-ci, et dans lequel le manchon de montage (10) est formé a) avec un alésage cylindrique central (2) pour recevoir le montant (3) et b) avec une rainure de guidage (14) pour guider cette dernière en utilisant une broche saillante (5) tout en étant introduite dans le manchon, et ayant une rainure à baïonnette (16) s'étendant selon un angle vers la rainure de guidage (14) et étant directement raccordée à ladite rainure de guidage verticale (14), **caractérisé en ce que** le manchon (10) est cylindrique et extérieurement circulaire et **en ce que** la rainure de guidage verticale (14) est prévue en perçant ou en coupant la rainure depuis l'intérieur de l'alésage de manchon (12) uniquement partiellement à travers le matériau du manchon (10).

9. Procédé selon la revendication 8, **caractérisé en ce que** la rainure de guidage verticale (14) est prévue en perçant ou en coupant deux alésages (14a, 14b) ou plus adjacents entre eux depuis l'intérieur de l'alésage de manchon (12) et éventuellement en retirant la partie supérieure (14c) qui est formée entre lesdits deux alésage (14a, 14b) ou plus, de sorte que la rainure obtient un fond lisse et plat (14d).

10. Procédé selon la revendication 8 ou 9, **caractérisé en ce que** la rainure à baïonnette (16) est formée entièrement à travers le matériau du manchon (10) et est formée avec une partie verticale (16a) qui est directement raccordée à la rainure de guidage verticale (14), et une partie de blocage (16b) horizontale ou légèrement inclinée vers le bas, s'étendant à partir de celle-ci.
